# EUROPÄISCHE PATENTANMELDUNG

(11) **EP 1 593 619 A1**
(43) Veröffentlichungstag der Anmeldung: **09.11.2005**
(21) Anmeldenummer: 04010836.7
(22) Anmeldetag: 06.05.2004
(51) Int. Cl.: B65G 27/02

(54) **Sortiertopf mit Innentopf**

(71) Anmelder: E + K Sortiersysteme GmbH, 74592 Kirchberg/Jagst (DE)
(72) Erfinder: Kraft, Fritz, 74592 Kirchberg Dörrmenz (DE)
(74) Vertreter: Grünecker, Kinkeldey, Stockmair & Schwanhäusser Anwaltssozietät

(57) **Zusammenfassung**

Die Erfindung betrifft einen Sortiertopf (21), insbesondere ein Vibrationssortiertopf, mit einem Boden (23), einer umlaufenden Wand (25), einer an der umlaufenden Wand (25) angeordneten Förderwendel (27) zur Zuführung von zu sortierenden Teilen (50) vom Boden (23) des Sortiertopfs (21) zur Sortiertopföffnung, und einem im Wesentlichen waagrecht verlaufenden Sortierabschnitt (31), der an der Topföffnung an die Förderwendel (27) anschließt. Um den Winkelbereich für die Sortierung möglichst groß auszulbilden, wird die umlaufende Wand (25) als Innentopf (26) im Inneren des Sortiertopfs (21) ausgebildet und der letzte Abschnitt (33) der Förderwendel (27) an der Topföffnung so ausgebildet, dass er sich über den Innentopfrand (29) hinaus erstreckt und erst dort in den Sortierabschnitt (31) übergeht. Somit befindet sich der Sortierabschnitt (31) außerhalb des Umfangs des Innentopfes (26), aber innerhalb des Sortiertopfes (21). Die Erfindung betrifft weiterhin einen Reinraumisolator mit einem erfindungsgemäßen Sortiertopf.

## Beschreibung

Die Erfindung betrifft einen Sortiertopf, insbesondere einen Vibrationssortiertopf, mit einem Boden, einer umlaufenden Wand und einer an der umlaufenden Wand angeordneten Förderwendel zur Zuführung von zu sortierenden Teilen vom Boden des Sortiertopfs zu einem im Wesentlichen waagrecht verlaufenden Sortierabschnitt, der an die Förderwendel anschließt.

Solche Sortiertöpfe sind im Stand der Technik bekannt und werden beispielsweise in der pharmazeutischen Industrie bei der Herstellung bzw. Verpackung von pharmazeutischen Produkten genutzt. Dabei werden die zu sortierenden Teile, wie Verschlusskappen, in großen Mengen in den Sortiertopf gegeben, wobei der Boden zusammen mit der umlaufenden Wand einen Vorratsbehälter bildet. Aufgrund von Vibrationen, die durch Federn im Zusammenspiel mit Elektromagneten erzeugt werden, bewegen sich die zu sortierenden Teile über die Förderwendel vom Boden des Sortiertopfs nach oben und gelangen dort in den Sortierabschnitt, der üblicherweise waagrecht verläuft. Der Sortierabschnitt weist Schikanen auf, die falsch liegende Teile wieder in den Sortiertopf zurückbefördern, während richtig liegende Teile aus dem Sortiertopf befördert werden.

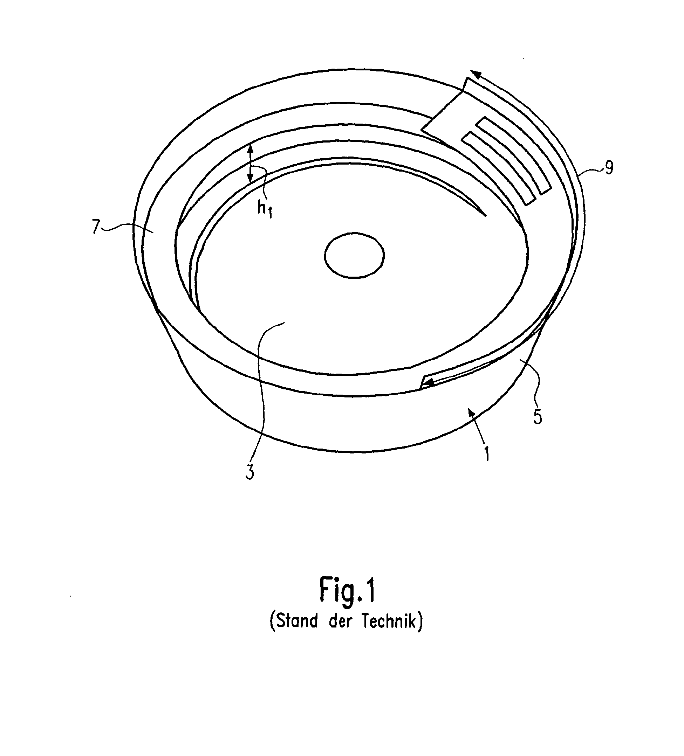

Fig. 1 zeigt eine perspektivische Draufsicht auf einen herkömmlichen zylindrischen Sortiertopf 1. Vom Boden 3 ausgehend, der zusammen mit einer Seitenwand 5 den Vorratsbehälter für die zu sortierenden Teile bildet, steigt innen eine Förderwendel 7 spiralförmig nach oben und mündet dort in den waagrecht verlaufenden Sortierabschnitt 9.

Bei dieser Art Sortiertopf 1 ergibt sich das folgende Problem. Auf der letzten Umdrehung der Förderwendel 7 nähert sich die Förderwendel 7 aufgrund ihrer Steigung dem Sortierabschnitt 9 an. Sobald der Abstand zwischen Förderwendel 7 und Sortierabschnitt 9 in die Größenordnung der Teile kommt, funktioniert der Sortiertopf nicht mehr, da die Teile zwischen dem Sortierabschnitt 9 und der Förderwendel 7 entweder verkeilen oder wieder auf den Boden 3 zurückfallen und somit keine Aussortierung mehr stattfinden kann. Da daher ein bestimmter Mindestabstand zwischen dem waagrechten Sortierabschnitt 9 und der Förderwendel 7 eingehalten werden muss, ist der Winkelbereich, auf dem die Sortierung vorgenommen werden kann, eingeschränkt. Üblicherweise hat man bei Sortiertöpfen mit einem Durchmesser von 400mm daher einen Sortierabschnitt 9 von nur ca. 120°. Da der Durchmesser des Sortiertopfs 1 nicht beliebig vergrößert werden kann, in der pharmazeutischen Industrie werden in der Regel Sortiertöpfe mit einem Durchmesser von bis zu 550 mm benutzt, da sie in standardisierte Reinraumisolatoren eingebaut werden, ist es auch so bei gleichbleibendem Winkelbereich nicht möglich eine ausreichende Sortierungstrecke zu erhalten.

Um trotzdem einen vergrößerten Winkelbereich zu erzielen, könnte man die Steigung der Förderwendel 7 entsprechend groß ansetzten, damit der Bereich, in dem der Abstand zwischen Förderwendel und Sortierabschnitt zu klein ist, kleiner wird. So wurden im Stand der Technik Steigungen von ca. 70 mm bis 100 mm pro Wendelumdrehung bei einem Sortiertopfdurchmesser von 400 mm vorgeschlagen. Dies ist jedoch nur dann sinnvoll, wenn die zu sortierenden Teile eine ausreichende Reibung aufweisen, damit sie nicht auf der Förderwendel 7 herunterrutschen. Da jedoch, beispielsweise in der Pharmaindustrie, vermehrt Verschlusskappen aus mit Teflon beschichtetem Gummi benutzt werden, lassen sich große Steigungen nicht realisieren, da es durch die Teflonbeschichtung zu einer erheblichen Verminderung der Reibung kommt und somit solche Teile in herkömmlichen Sortiertöpfen nicht bis oben befördert werden können.

Die Sortiertöpfe nach dem Stand der Technik weisen ein weiteres Problem auf, das ebenfalls an eine zu große Steigung der Förderwendel geknüpft ist. Damit genügend Teile aus dem Topf über die Förderwendel zum Sortierabschnitt gelangen können, werden im herkömmlichen Sortiertopf eine ausreichend große Anzahl von zu sortierenden Teilen am Boden benötigt, die die steigenden Teile hochdrücken. Sind diese nicht vorhanden so erreichen die zu sortierenden Teile nicht mehr den Sortierabschnitt. Aufgrund hoher Reinheitsvorschriften in der pharmazeutischen Industrie müssen im Sortiertopf zurückbleibende Teile weggeworfen werden, was mit erheblichen finanziellen Verlusten verbunden ist.

Es ist daher Aufgabe der vorliegenden Erfindung, einen Sortiertopf, insbesondere einen Vibrationssortiertopf, bereitzustellen, der bei gleichbleibendem Sortiertopfdurchmesser einen größeren Sortierabschnitt ermöglicht, wobei gleichzeitig die Steigung der Förderwendel ausreichend gering gehalten werden kann, so dass beliebige zu sortierende Teile, ebenso mit geringer Reibung, aus dem Sortiertopf auf den im Wesentlichen waagrecht liegenden Sortierabschnitt gelangen können.

Diese Aufgabe wird mit dem Sortiertopf nach Anspruch 1 gelöst.

Erfindungsgemäß umfasst der Sortiertopf einen Boden, eine umlaufende Wand, eine an der umlaufenden Wand ansteigende Förderwendel zur Zuführung von zu sortierenden Teilen vom Boden des Sortiertopfs nach oben zur Sortiertopföffnung hin, und einen im Wesentlichen waagrecht verlaufenden Sortierabschnitt, der an der Sortiertopföffnung an die Förderwendel anschließt. Dabei ist die umlaufende Wand als Innentopf im Inneren des Sortiertopfs ausgebildet und der Sortierabschnitt ist derart angeordnet, dass sich zumindest dort, wo der vertikale Abstand zwischen dem Sortierabschnitt und der Förderwendel kleiner oder gleich der größtmöglichen Ausdehnung der zu sortierenden Teile ist, der Sortierabschnitt außerhalb des Umfangs des Innentopfes, aber innerhalb des Sortiertopfs befindet. Insbesondere kann es sich bei dem Sortiertopf um einen Vibrationssortiertopf handeln, wobei die zu sortierenden Teile durch Vibrationen entlang der Förderwendel nach oben bewegt werden. Dabei kann eventuell auf der Förderwendel schon eine Vorsortierung stattfinden.

Bei der erfindungsgemäßen Anordnung der Förderwendel in Bezug auf den Sortierabschnitt läuft der Sortierabschnitt, in den Bereichen in denen der vertikale Abstand zwischen dem Sortierabschnitt und der Förderwendel nicht ausreichend groß ist, nicht mehr direkt oberhalb der Förderwendel, sondem außerhalb des Innentopfs. Somit lässt sich die Steigung der Förderwendel unabhängig von der benötigten Länge des Sortierabschnitts wählen, so dass auch Teile mit geringer Reibung nach oben zum Sortiertopfrand befördert werden können. Da außerdem die Förderwendel innen am Innentopf läuft und der Sortierabschnitt innerhalb der Außenwand des Sortiertopfs angeordnet ist, besitzt der Sortiertopf weiterhin die gleichen Außenmaße wie herkömmliche Sortiertöpfe. Der erfindungsgemäße Sortiertopf lässt sich somit ohne eine weitere Anpassung in die herkömmlichen Produktionslinien, bei denen diese Art Sortiertöpfe benutzt werden, einfügen.

In einer Variante kann der letzte Abschnitt der Förderwendel sich an der Sortiertopföffnung über den Innentopfrand hinaus erstrecken und dort in den Sortierabschnitt übergehen. Somit befindet sich der gesamte Sortierabschnitt außerhalb des Umfangs des Innentopfes, aber innerhalb des Sortiertopfes. Somit kommt es zu einer räumlichen Trennung der Beförderung der Teile und deren Aussortierung.

Vorteilhafterweise kann der Sortierabschnitt so ausgebildet sein, dass die Sortierung über einen Winkelbereich von ungefähr mindestens 150°, insbesondere über einen Winkelbereich von mindestens 210° stattfindet. Somit wird gewährleistet, dass selbst bei einem festgesetzten Durchmesser ausreichend Weglänge für die Sortierung vorhanden ist. Da herkömmliche Sortierer nur in einem Winkelbereich von höchstens 120° arbeiten können, ergibt sich daher eine erhebliche Verbesserung der Sortiermöglichkeiten.

Gemäß einer vorteilhaften Ausführungsform kann die Förderwendel eine Steigung von 10 mm bis 50 mm, insbesondere 20 mm bis 40 mm pro Umdrehung aufweisen. Bei solchen Steigungen können selbst Teile mit geringer Reibung, wie beispielsweise teflonbeschichtete Teile, dank der Vibrationen entlang der Förderwendel nach oben steigen, ohne zurück zu rutschen. Im Vergleich zu den im Stand der Technik üblichen Steigungen von ca. 70 bis 100 mm, die für den Transport von teflonbeschichteten Teilen nicht geeignet sind, lässt sich die Anwendung der Sortiertöpfe daher auch auf schwer zu befördernde Teile ausdehnen.

Dank der geringen Steigung der Förderwendel ist es weiterhin auch nicht mehr nötig, eine ausreichende Anzahl von Teilen auf dem Boden des Sortiertopfs bereitzustellen, die dafür sorgen, dass die sich auf Förderwendel befindlichen Teile nach oben geschoben werden, so dass Vorteilhafterweise der erfindungsgemäße Sortiertopf nahezu vollständig leer laufen kann.

Gemäß einer vorteilhaften Ausführungsform kann der Sortierabschnitt so ausgebildet sein, dass richtig liegende Teile aus dem Sortiertopf geführt werden, während falsch liegende Teile außerhalb des Innentopfs auf den Boden des Sortiertopfs zurückfallen. Somit kehren die falsch liegenden Teile ohne eine zusätzliche Zwischenvorrichtung wieder in die Sortiervorrichtung zurück.

Vorteilhafterweise kann der Innentopf mindestens eine Öffnung in der umlaufenden Wand aufweisen, wobei die Öffnung an der Außenseite des Innentopfs auf Höhe des Bodens angeordnet ist und ausreichend groß ausgebildet ist, so dass diese außerhalb des Innentopfs befindlichen, zu sortierenden Teile durch die Öffnung wieder in den Innentopf gelangen. Dort können sie wieder über die Förderwendel nach oben geführt werden und im folgenden Sortierschritt, wenn sie dann richtig liegen, aus der Sortiervorrichtung zur Weiterverarbeitung gelangen.

Gemäß einer vorteilhaften Weiterbildung kann der Boden zwischen einer umlaufenden Außenbegrenzung des Sortiertopfs mit dem Innentopf schräg von außen nach innen verlaufen, wobei der Boden nach außen hin ansteigt. Somit werden die zurückgefallenen, falsch liegenden Teile dank der Schwerkraft an die umlaufende Wand des Innentopfs befördert, von wo sie dank der Vibrationen bis an die Öffnung in der umlaufenden Wand des Innentopfs transportiert werden und durch die Öffnung wieder in den Innentopf gelangen. Somit wird gesichert, dass die Teile, die vom Sortierabschnitt wieder herunterfallen, anschließend zuverlässig zurück in den Innentopf gelangen.

Günstigerweise kann dabei der Boden längs der umlaufenden Wand eine Stufe aufweisen, wobei der Boden innerhalb des Innentopfs, zumindest an der Position der mindestens einen Öffnung, niedriger angeordnet ist als außerhalb des Innentopfs. Dadurch wird verhindert, dass Teile aus dem Innentopf durch diese mindestens eine Öffnung in den Bereich zwischen der Außenwand des Sortiertopfs und der umlaufenden Wand des Innentopfs gelangen können. Dadurch verhindert man, dass Teile nicht aus dem Sortiertopf herausbefördert werden können und zurückbleiben.

In einer bevorzugten Ausführungsform kann der Sortiertopf und der Innentopf eine im Wesentlichen zylindrische Form aufweisen, wobei der Sortiertopf einen Durchmesser von bis zu 600 mm, insbesondere bis zu 450 mm, der Innentopf einen Durchmesser von bis zu 400mm, insbesondere bis zu 350 mm hat. Dank der zylindrischen Form lässt sich durch den Boden und die umlaufende Wand ein relativ großer Vorratsraum für die zu sortierenden Teile realisieren und gleichzeitig dank dem Zusammenspiel von Elektromagneten und Federn zuverlässig die Vibrationsbewegung erzeugen, die dazu führt, dass die Teile auf der Förderwendel nach oben laufen können. Der geeignete Durchmesser sowohl des Sortiertopfs als auch des Innentopfs wird da bei der Anwendung entsprechend gewählt.

Günstigerweise kann der Boden, die umlaufende Wand, die Förderwendel und der Sortierabschnitt aus Metall hergestellt sein und insbesondere die mit den zu sortierenden Teilen in Berührung kommenden Bereiche des Sortiertopfs eine glatte Oberfläche aufweisen. Ein solcher Sortiertopf kann zuverlässig gereinigt werden und somit in Reinraumumgebung, wie dies beispielsweise in der pharmazeutischen Industrie üblich ist, angewandt werden. Dabei hat es sich insbesondere als günstig erwiesen, die Sortiertöpfe nach einer Polierbehandlung von Hand auch noch zu elektropolieren.

Die Erfindung betrifft auch einen Reinraumisolator zur Benutzung bei der Herstellung und/oder Verpackung von pharmazeutischen Produkten, mit einem Sortiertopf wie oben stehend beschrieben. Somit kann der erfindungsgemäße Sortiertopf die gültigen Standards zur Verarbeitung von Pharmazeutika erfüllen.

Eine erfindungsgemäße Ausführungsform eines Sortiertopfs wird anhand der beiliegenden Figuren beschrieben. Es zeigen:
- Fig. 1: eine perspektivische Schnittansicht eines herkömmlichen Sortiertopfs,
- Fig. 2: eine perspektivische Gesamtansicht eines Sortiertopfs gemäß der vorliegenden Erfindung, und
- Fig. 3: eine perspektivische Querschnittsansicht des erfindungsgemäßen Sortiertopfs.

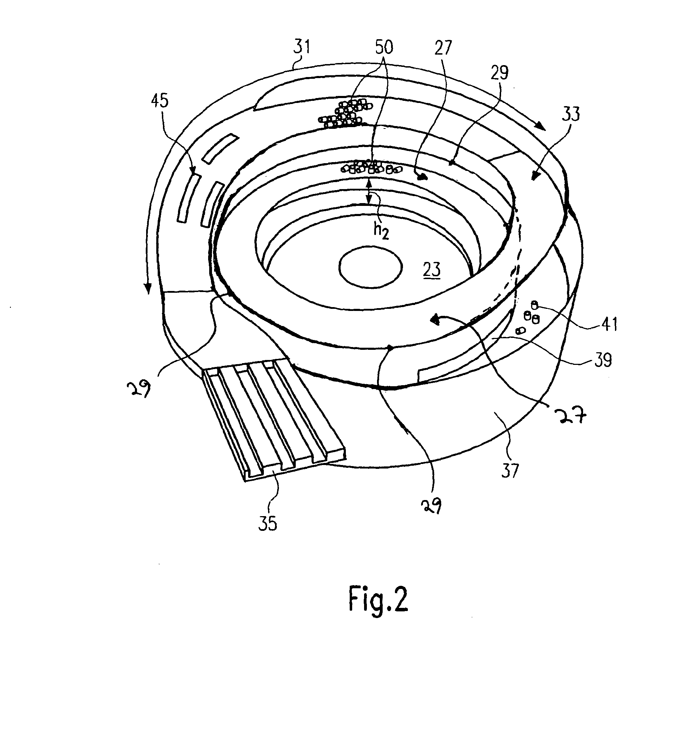

Fig. 2 zeigt eine Ausführungsform eines erfindungsgemäßen Sortiertopfs 21. Dieser ist in dieser Ausführungsform zylindrisch, jedoch sind auch weiter Formen, wie beispielsweise kegelförmig auch denkbar. Außerdem muss der Sortiertopf nicht zwingend symmetrisch sein.

Der Sortiertopf 21 umfasst einen Boden 23, eine umlaufende Wand 25, die zusammen mit einem Teil des Bodens 23 den Innentopf 26 bildet, eine, an der umlaufenden Wand angeordnete Förderwendel 27, die spiralförmig vom Boden 23 ausgehend an der Innenseite der umlaufenden Wand 25 nach oben bis zum Rand 29 des Innentopfs 26 läuft und einen im Wesentlichen waagrecht verlaufenden Sortierabschnitt 31, der sich an die Förderwendel 27 anschließt, wobei der letzte Abschnitt 33 der Förderwendel an der Topföffnung sich seitlich über den Innentopfrand 29 hinaus erstreckt (der überdeckte Innentopfrand 29 ist daher unterhalb des Abschnitts 33 gestrichelt dargestellt) und erst dort in den Sortierabschnitt 31 übergeht. Im gezeigten Ausführungsbeispiel befindet sich der Sortierabschnitt 31 im gesamten Winkelbereich zwischen der Außenwand 37 des Sortiertopfs 21 und der Innenseite der umlaufenden Wand 25 des Innentopfs 26. Gemäß der Erfindung könnte, in einer Variante der dargestellten Ausführungsform, der Sortierabschnitt 31 auch so ausgebildet sein, dass er sich zumindest in den Bereichen, in denen der vertikale Abstand zwischen Sortierabschnitt 31 und Förderwendel 27 kleiner als die größtmögliche Ausdehnung von zu sortierenden Teilen 50 ist, außerhalb des Innentopfs 26 aber innerhalb des Sortiertopfs 21 verläuft, und sich somit also zumindest teilweise noch oberhalb der Förderwendel 27 befindet.

In der dargestellten Ausführungsform erstreckt sich der Sortierabschnitt über einen Winkelbereich von ca. 250°. Je nach Anwendung lässt sich dieser jedoch sowohl verkleinern als auch vergrößern. Der Sortierabschnitt 31 endet mit einem Übergabe- oder Auslaufabschnitt 35, der dazu dient, die aussortierten, richtig liegenden Teile an eine folgende Maschine (nicht dargestellt) weiterzugeben. Falsch liegende Teile fallen durch, den Teilen entsprechend ausgebildete Schikanen auf den Teil des Bodens 23, der sich ebenfalls zwischen der Außenwand 37 und der Außenseite der umlaufenden Wand 25 des Innentopfs 26 befindet.

Im Vergleich zu dem in Fig. 1 dargestellten Abstand h₁ der spiralförmigen Förderwendel 7, ist der Abstand h₂ der spiralförmigen Förderwendel 27 wesentlich kleiner und liegt im Bereich von 10 bis 50 mm, insbesondere von 20 bis 40 mm.

Der sich zwischen der Außenwand 37 und der äußeren Seite der umlaufenden Wand 25 des Innentopfs 26 befindliche Boden 23 steigt von innen ausgehend nach außen hin schräg an. Eine Öffnung 39 ist in der umlaufenden Wand 25 auf Höhe des Bodens 23 angeordnet und so ausgebildet, dass sich im Zwischenraum zwischen der Außenwand des Sortiertopfs und dem Innentopf 26 befindliche Teile 41 durch diese Öffnung 39 wieder in den Innentopf 26 gelangen können. Im Ausführungsbeispiel ist nur eine Öffnung 39 dargestellt, jedoch können ebenso auch mehrere solcher Öffnungen 39 vorgesehen sein. Außerdem liegt der Boden 23 im Innentopf 26 tiefer als außerhalb des Innentopfs 26 und bildet auf Höhe der Öffnung 39, an der umlaufenden Wand 25, eine Stufe aus.

Der Sortiertopf 21 ist auf einer Antriebsvorrichtung (nicht gezeigt) angeordnet, in der sich Federn und Elektromagnete befinden, die dazu benutzt werden, den Sortiertopf in gewünschte Vibrationen zu versetzen, so dass die Teile sich entlang der Förderwendel bewegen können.

Für eine Anwendung in der pharmazeutischen Industrie kann der Sortiertopf aus Metall hergestellt werden, wobei die mit den Teilen in Berührung kommenden Teile glatte Oberflächen aufweisen, wie man sie beispielsweise durch Elektropolierung erzielt.

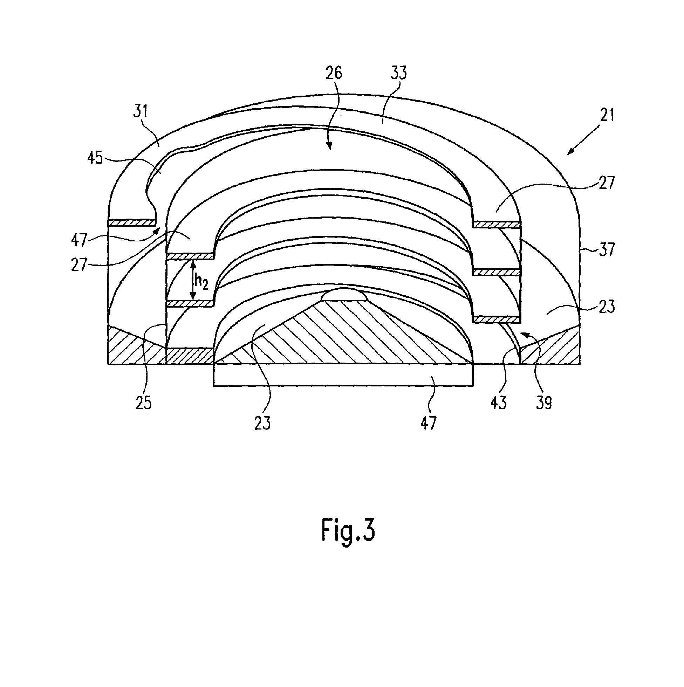

Fig. 3 zeigt schematisch eine perspektivische Schnittansicht des in der Fig. 2 dargestellten erfindungsgemäßen Sortiertopfs 21. Dabei tragen sich entsprechende Merkmale dieselben Bezugszeichen wie in der Fig. 2 und werden daher nicht mehr näher erläutert. Der Boden 23 innerhalb der umlaufenden Wand 25 ist in diesem Ausführungsbeispiel so ausgebildet, dass er in der Mitte leicht höher liegt und in Richtung der umlaufenden Wand 25 zum Topfrand hin abfällt. Dank der Schwerkraft und der Vibrationen werden somit die zu sortierenden Teile in Richtung der umlaufenden Wand bewegt. Auf der rechten unteren Seite der umlaufenden Wand 25 lässt sich die Öffnung 39 erkennen. Ebenso der schräg nach oben verlaufende Bodens 23 im Bereich außerhalb des Innentopfs 26, sowie die Stufe 43 des Bodens 23 auf Höhe der umlaufenden Wand 25. Fig. 3 zeigt außerdem, dass der Sortierabschnitt 31, zumindest in dem Bereich in dem der vertikale Abstand zwischen Sortierabschnitt 31 und Förderwendel 27 kleiner oder gleich der größtmöglichen Ausdehnung der Teile 50 ist, außerhalb des Innentopfs 26 liegt und somit unabhängig von der spiralförmigen Förderwendel 27 ist, so dass die Steigung der Förderwendel pro Umdrehung h₂ somit unabhängig von den Reibungseigenschaften und der Größe der zu sortierenden Teile gewählt werden kann. Der Endbereich 33 der Förderwendel 27 liegt in diesem Beispiel außerhalb des Innentopfs 26. Nur schematisch dargestellt ist eine Sortierschikane 45, die so ausgebildet ist, dass richtig liegende Teile auf dem Sortierabschnitt 31 verbleiben, während falsch liegende Teile durch den zwischen der Schikane 45 und der umlaufenden Wand 25 des Innentopfs 26 auftretenden Schlitz hindurchfallen. Ebenso nur schematisch ist die Antriebsvorrichtung 47 zur Erzeugung der Vibrationen dargestellt.

Nachfolgend wird anhand der Figuren 2 und 3 die Funktionsweise des erfindungsgemäßen Sortiertopfs 21 erläutert. Zu sortierende Teile 50 werden in den als Vorratsbereich dienenden Innentopf 26 geschüttet. Dank der Vibrationen und der Schwerkraft rutschen die Teile 50 bevorzugt nach außen zur umlaufenden Wand 25 hin und bewegen sich dank der Vibrationskräfte auf der Förderwendel 27 vom Boden 23 ausgehend nach oben. Dabei kann eventuell schon eine Vorsortierung der Teile stattfinden. Nach Durchlauf der gesamten Wendel 27 gelangen die zu sortierenden Teile 50 schließlich bis an den Rand des Innentopfs 26 und überqueren diesen im Endbereich 33 der Förderwendel 27. Damit die Teile 50 zuverlässig vom Boden 23 nach oben gelangen, sind die Vibrationen und de Abstand der Wendeln h₂ entsprechend gewählt. Der Sortierabschnitt 31, der im Wesentlichen waagrecht verläuft, ist mit Schikanen 45 versehen, an denen nur richtig liegende Teile vorbeikommen, die dann an das Übergabe- oder Auslaufabschnitt 35 gelangen, von wo aus sie in die nächste Maschine eintreten können. Falsch liegende Teile fallen durch Schlitze 47 in den Bereich zwischen der Außenwand 37 des Sortierers 21 und der umlaufenden Wand 25 des Innentopfs 26. Dank des schräg verlaufenden Bodens 23, im Bereich zwischen der umlaufenden Wand 25 und der Außenwand 37, und der Vibrationen rutschen die falsch liegenden Teile 41 zur umlaufenden Wand 25 hin und können, sobald sie auf die Öffnung 39 treffen, wieder in das Innere des Innentopfs 26 gelangen, von wo aus sie wieder auf der Förderwendel 27 nach oben befördert werden können.

Zu sortierende Teile können kontinuierlich nachgegeben werden, oder man lässt den Sortiertopf erst leer laufen und gibt dann wieder eine vorbestimmte Menge an sortierenden Teilen nach.

Der erfindungsgemäße Sortiertopf lässt sich insbesondere vorteilhaft in einem Reinraumisolator, wie er üblicherweise in der pharmazeutischen Industrie benutzt wird, nutzen. Ebenso sind jedoch weitere Anwendungen dieses Sortiertopfes, beispielsweise in der Automobilindustrie, wo die Anforderung an die Reinheit geringer sind, auch denkbar.

## Patentansprüche

1. Sortiertopf, insbesondere Vibrationssortiertopf, mit
- einem Boden (23),
- einer umlaufenden Wand (25),
- einer an der umlaufenden Wand (25) ansteigenden Förderwendel (27) zur Zuführung von zu sortierenden Teilen vom Boden (23) des Sortiertopfs nach oben zur Sortiertopföffnung hin, und
- einem im Wesentlichen waagrecht verlaufenden Sortierabschnitt (31), der an der Sortiertopföffnung an die Förderwendel (27) anschließt,
wobei die umlaufende Wand als Innentopf (26) im Inneren des Sortiertopfs ausgebildet ist, und wobei der Sortierabschnitt (31) derart angeordnet ist, dass sich zumindest dort, wo der vertikale Abstand zwischen dem Sortierabschnitt (31) und der Förderwendel (27) kleiner oder gleich der größtmöglichen Ausdehnung der zu sortierenden Teile ist, der Sortierabschnitt (31) außerhalb des Umfangs des Innentopfes (26), aber innerhalb des Sortiertopfs befindet.

2. Sortiertopf nach Anspruch 1, wobei der letzte Abschnitt der Förderwendel (27) an der Topföffnung sich über den Innentopfrand (29) hinaus erstreckt und dort in den Sortierabschnitt (31) übergeht, derart, dass sich der Sortierabschnitt (31) außerhalb des Umfangs des Innentopfes (26), aber innerhalb des Sortiertopfs befindet.

3. Sortiertopf nach Anspruch 1 oder 2, wobei der Sortierabschnitt (31) so ausgebildet ist, dass die Sortierung über einen Winkelbereich von ungefähr mindestens 150° stattfindet, insbesondere über einen Winkelbereich von mindestens 210° stattfindet.

4. Sortiertopf nach einem der Ansprüche 1 bis 3, wobei die Förderwendel (27) eine Steigung (h₂) von 10mm bis 50mm, insbesondere 20mm bis 40mm, pro Umdrehung aufweist.

5. Sortiertopf nach einem der Ansprüche 1 bis 4, wobei der Sortierabschnitt (31) so ausgebildet ist, dass richtig liegende Teile aus dem Sortiertopf geführt werden und falsch liegende Teile außerhalb des Innentopfs (26) auf den Boden (23) des Sortiertopfs zurückfallen.

6. Sortiertopf nach Anspruch 5, wobei der Innentopf (26) mindestens eine Öffnung (39) in der umlaufenden Wand (25) aufweist, wobei die Öffnung an der Außenseite des Innentopfs (26) auf Höhe des Bodens (23) angeordnet ist und ausreichend groß ausgebildet ist, so dass außerhalb des Innentopfs (26) befindliche, zu sortierende Teile durch die Öffnung (39) wieder in den Innentopf (26) gelangen.

7. Sortiertopf nach Anspruch 6, wobei der Boden (23) zwischen einer umlaufenden Außenbegrenzung (37) des Sortiertopfs und dem Innentopf (26) schräg von außen nach innen verläuft, wobei der Boden (23) nach außen hin ansteigt.

8. Sortiertopf nach Anspruch 7, wobei der Boden (23) längs der umlaufenden Wand (25) eine Stufe (43) aufweist, wobei der Boden (23) innerhalb des Innentopfs (26), zumindest an der Position der mindestens einen Öffnung (39), niedriger angeordnet ist als außerhalb des Innentopfs (26).

9. Sortiertopf nach einem der Ansprüche 1 bis 8, wobei der Sortiertopf und der Innentopf (26) eine im Wesentlichen zylindrische Form aufweisen, wobei der Sortiertopf einen Durchmesser von bis 600 mm, insbesondere bis zu 450 mm und der Innentopf (26) einen Durchmesser von bis zu 400 mm, insbesondere 350 mm hat.

10. Sortiertopf nach einem der Ansprüche 1 bis 9, wobei der Boden (23), die umlaufende Wand (25), die Förderwendel (27) und der Sortierabschnitt (31) aus Metall hergestellt sind, und wobei insbesondere die mit den zu sortierenden Teilen in Berührung kommende Bereiche des Sortiertopfs eine glatte Oberfläche aufweisen.

11. Reinraumisolator zur Benutzung bei der Herstellung und/oder Verpackung von pharmazeutischen Produkten, mit einem Sortiertopf nach einem der Ansprüche 1 bis 10.
